Europäisches Patentamt

European Patent Office

Office européen des brevets

(19)

(11) **EP 1 280 218 A1**

(12) **EUROPÄISCHE PATENTANMELDUNG**

(43) Veröffentlichungstag:
   **29.01.2003 Patentblatt 2003/05**

(51) Int Cl.⁷: **H01M 8/04**

(21) Anmeldenummer: **01810741.7**

(22) Anmeldetag: **27.07.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(71) Anmelder:
   • **ABB RESEARCH LTD.**
     **8050 Zürich (CH)**
   • **E.I. DU PONT DE NEMOURS AND COMPANY**
     **Wilmington Delaware 19898 (US)**

(72) Erfinder:
   • **Ohler, Christian**
     **5400 Baden (CH)**
   • **Christen, Thomas**
     **5413 Birmenstorf (CH)**

(74) Vertreter: **ABB Patent Attorneys**
   **c/o ABB Schweiz AG**
   **Brown Boveri Strasse 6**
   **5400 Baden (CH)**

(54) **Verfahren zur Regelung der Methanolkonzentration in direkt-Methanol-Brennstoffzellen**

(57)   Eine Direkt-Methanol-Brennstoffzelle beziehungsweise ein Verfahren zur Regelung der Methanolkonzentration, welches ohne zusätzlichen Methanolkonzentrations-Sensor (47) auskommt. Statt dessen werden durch kleine Variationen der Systemgrössen Strom I und Methanolkonzentration M die charakteristischen Strom-Spannungs-Kennlinien der Brennstoffzelle (40) abgetastet und daraus Informationen zur Regelung gewonnen. Bei Systemen, welche über einen elektrischen Zwischenspeicher (49) verfügen, wird ein angeschlossener Verbraucher trotz des erfindungsgemässen Verlassens des optimalen Operationspunktes der Brennstoffzelle unterbrechungsfrei versorgt.

Fig. 4

EP 1 280 218 A1

**Beschreibung**

TECHNISCHES GEBIET

Die vorliegende Erfindung bezieht sich auf das Gebiet der Direkt-Methanol-Brennstoffzellen (Direct Methanol Fuel Cells DMFC). Sie betrifft ein Verfahren zur Regelung der Methanolkonzentration in DMFC Systemen gemäss dem Oberbegriff des Patentanspruchs 1 sowie ein Verfahren zur Bestimmung der Methanolkonzentration in DMFCs gemäss dem Oberbegriff des Patentanspruchs 10.

STAND DER TECHNIK

Als Alternative zu fossilen Energieträgern hat Methanol $CH_3OH$ gegenüber Wasserstoff $H_2$ den Vorteil, dass es unter üblichen Umgebungsbedingungen flüssig ist und die bestehende Infrastruktur zur Verteilung und Lagerung genutzt werden kann. Zudem sind die Anforderungen an die Sicherheit wesentlich günstiger als bei Wasserstoff. Für einen Einsatz in Wasserstoff-Brennstoffzellen ist die Erzeugung von Wasserstoff aus Methanol am Einsatzort selbst mittels Reformierung zwar durchaus machbar, weist aber ein verzögertes Kaltstartverhalten auf.

Bei sogenannten Direkt-Methanol-Brennstoffzellen (Direct Methanol Fuel Cells DMFC) wird Methanol direkt elektrochemisch oxidiert, d.h. ohne den vorhergehenden Zwischenschritt einer Reformierung zu $H_2$. Im Allgemeinen wird mit einer verdünnten Methanollösung gearbeitet, wobei die Lösung zirkuliert und durch Zuführung von konzentriertem Methanol die für einen optimalen Betrieb gewünschte Konzentration geregelt wird. Dazu ist es nach dem Stand der Technik erforderlich, die jeweils aktuelle Konzentration der Lösung zu kennen. Zu diesem Zweck sind verschiedene Methoden mit zusätzlich zu installierenden Sensoren wie beispielsweise hochpräzise Dichtesensoren bekannt, bei deren Ausfall aber das ganze Brennstoffzellensystem lahmgelegt wird.

In der DE-A 199 38 790 wird die Methanolkonzentration bestimmt, indem mit der Lösung als Dielektrikum die Kapazität eines Kondensators gemessen wird, woraus die Dielektrizitätskonstante der Lösung gewonnen und über deren monotone Konzentrationsabhängigkeit die Methanolkonzentration bestimmt wird. Um die geforderte Auflösung zu erreichen, wird vorgeschlagen, zusätzlich einen Referenzkondensator mit einem Dielektrikum im Sollkonzentrationsbereich der Methanollösung vorzusehen.

In einem anderen Sensor wird zwischen zwei Elektroden einer kleinen, separaten elektrochemischen Zelle eine Spannung angelegt, so dass an einer Elektrode Methanol oxidiert und an der anderen Elektrode Wasserstoffionen reduziert werden. Diese Zelle wird so betrieben, dass der in der elektrochemischen Zelle fliessende Strom durch die Kinetik des Massentransportes begrenzt ist und somit von der Methanolkonzentration abhängt. Analoge Verfahren werden auch zur Bestimmung des Alkoholgehalts in Humanatemluft eingesetzt.

DARSTELLUNG DER ERFINDUNG

Aufgabe der vorliegenden Erfindung ist es, ein Verfahren zur Regelung der Methanolkonzentration eines Direkt-Methanol-Brennstoffzellensystems zu schaffen, welches es erlaubt, auf zusätzliche Methanolkonzentrationssensoren zu verzichten und entsprechend kostengünstig ist. Diese Aufgabe wird durch ein Regelungsverfahren mit den Merkmalen des Patentanspruchs 1 gelöst.

Kern der Erfindung ist es, bei einer Brennstoffzelle nicht auf einen Vergleich der absoluten Soll- und Ist-Konzentrationswerte der Brennstofflösung abzustellen, sondern die für die Brennstoffzelle charakteristischen Kennlinien der Spannung als Funktion von Systemgrössen wie der Stromstärke beziehungsweise Stromdichte oder der Methanolkonzentration zumindest ansatzweise abzutasten. Die infolge einer Variation einer Systemgrösse beobachtete Spannungsänderung wird dabei zur Regelung der Methanolkonzentration herangezogen, d.h. zur Entscheidung, ob und wenn ja wieviel konzentriertes Methanol zur Brennstofflösung zugegeben werden soll. Die Erfindung basiert auf der Erkenntnis, dass die meisten Systemparameter wie die Temperatur der Brennstofflösung, die Flussraten der Reaktanden, der Druck der gasförmigen Reaktanden oder die Menge an Katalysatormaterial auf bekannten Wegen einfach und unmittelbar bestimmt werden können beziehungsweise vorbekannt sind. Demgegenüber ist die Methanolkonzentration diejenige Systemgrösse, welche den am aufwändigsten zu bestimmenden Parameter der Strom-Spannungs-Kennlinien der Brennstoffzelle darstellt und somit am besten indirekt über ihren Einfluss auf ebendiese Spannungs-Kennlinien bestimmt wird.

In einer ersten Ausführungsform des erfindungsgemässen Regelverfahrens wird deshalb mittels bekannter Methoden geprüft, ob einer der unmittelbar bestimmbaren Systemparameter sich geändert hat und die gemessene Spannung möglicherweise eine veränderte Methanolkonzentration vortäuscht. Als zusätzlicher Systemparameter tritt der schwer zu bestimmende Verstopfungsgrad der kathodenseitigen Elektrodenporen mit Wasser auf. Um dessen Einfluss zu minimieren, wird während des Regelungsprozesses die kathodenseitige Luftzufuhr erhöht.

Gemäss einer weiteren Ausführungsform wird die Reaktion des Systems auf eine Variation der Stromstärke in Form eines Strom-Spannungs-Kennlinienausschnittes ermittelt. Dies erfolgt beispielsweise in vorgegebenen zeitlichen Abständen, insbesondere auch wenn aus den Betriebsparametern noch kein Hinweis auf eine Methanolkonzentrationsabnahme ersichtlich ist. Eine Auswertung dieses Kennlinienausschnittes mit mathematischen Methoden erlaubt es, charakteristische Punkte der Kennlinie zu lokalisieren und durch Vergleich mit tabellierten Werten die absolute Methanolkonzentration zu bestimmen.

Alternativ dazu kann auch der Methanolgehalt bei unbekanntem Ist- oder Ausgangswert um einen bekannten Wert verändert werden, wäenddem die Stromstärke festgehalten wird. Diese versuchsweise Regeleingriff wird insbesondere dann ausgelöst, wenn aufgrund eines beobachteten Abfalls der Spannung ein Verdacht auf eine Methanolreduktion besteht. Steigt in der Folge die Spannung wieder an, ist ein erster Schritt in die richtige Richtung bereits getan, der gegebenenfalls durch weitere Methanolzugaben verstärkt wird, andernfalls muss die Ursache des Spannungsabfalls woanders gesucht werden.

Bei Stapeln aus mehreren, bipolar angeordneten, seriegeschalteten Brennstoffzellen, welche alle durch dieselbe Brennstofflösung gespeist werden, kann als Spannung direkt die Spannung des ganzen Stapels genommen werden. Insbesondere bei einem System mit einem elektrischen Zwischenspeicher ist das vorgeschlagene Regelungsverfahren vorteilhaft, da während dem Regelungsprozess eine Abweichung der Systemgrössen vom optimalen Operationspunkt erfolgt, der Zwischenspeicher aber eine ununterbrochene und konstante Versorgung eines Konsumenten sicherstellt.

Vorteilhafte Ausführungsformen sind Gegenstand der abhängigen Patentansprüche.

KURZE BESCHREIBUNG DER FIGUREN

Nachfolgend wird die Erfindung anhand von Ausführungsbeispielen im Zusammenhang mit den Zeichnungen näher erläutert. Es zeigen

    Fig. 1 einen Querschnitt durch eine Direkt-Methanol-Brennstoffzelle,
    Fig.2 Potentialkurven einer Direkt-Methanol-Brennstoffzelle,
    Fig.3 Strom-Spannungs-Kennlinien für unterschiedliche Methanokonzentrationen, und
    Fig.4 ein Schema eines Brennstoffzellensystems.

Die in den Zeichnungen verwendeten Bezugszeichen sind in der Bezugszeichenliste zusammengefasst. Grundsätzlich sind gleiche Teile mit denselben Bezugszeichen versehen.

WEGE ZUR AUSFÜHRUNG DER ERFINDUNG

Detaillierte Angaben zum Aufbau und zur Funktionsweise von Direkt-Methanol-Brennstoffzellensystemen können beispielsweise dem Artikel von M. Baldauf et al "Direkt-Methanolbrennstoffzellen", erschienen in "Brennstoffzellen", K. Ledjeff-Hey et al. (Hrsg.), C.F. Müller Verlag, Heidelberg, 2001, Seiten 77 - 100, entnommen werden. Im Folgenden wird nur in zusammenfassender Form darauf eingegangen.

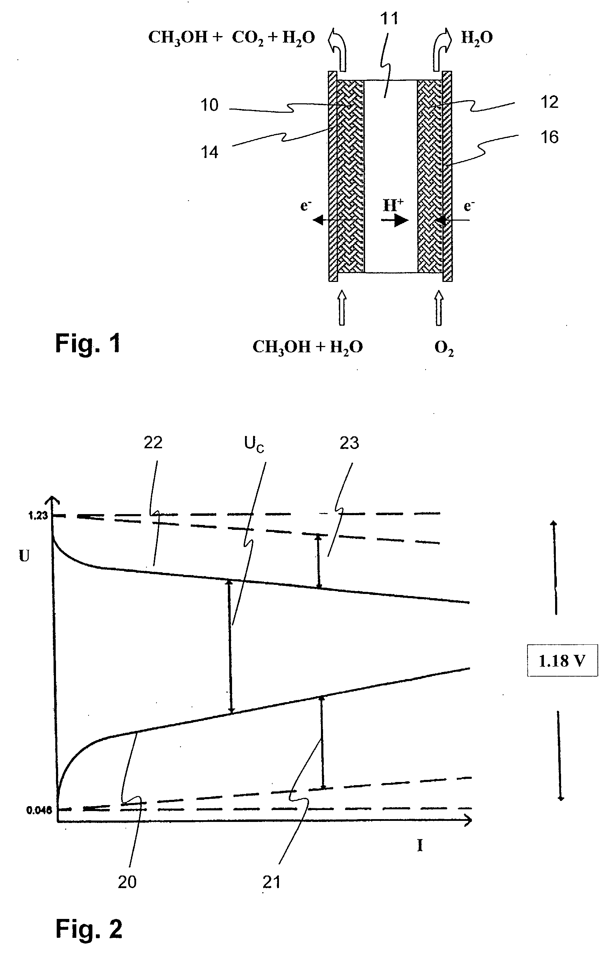

In Fig.1 ist ein Aufbau einer sogenannten Membranbrennstoffzelle 1 schematisch dargestellt. Diese umfasst zwischen einer Anode 10 und einer Kathode 12 einen geeigneten protonenleitenden Feststoffelektrolyten 11, beispielsweise eine 100 μm dicke befeuchtete Polymermembran. Die Elektroden 10, 12 weisen eine offenporöse Struktur auf, vorzugsweise mit Öffnungen im Nanometerbereich, und bestehen aus einem elektrisch leitfähigen Material, typischerweise Kohlefasergewebe, welches mit in Fig.1 nicht dargestellten Katalysatoren wie Pt oder Pt/Ru bedeckt ist. Die Elektroden 10, 12 sind auf ihrer dem Elektrolyten 11 abgewandten Seite jeweils durch einen Stromkollektor 14, 16 aus einem Werkstoff auf Kohlenstoffbasis kontaktiert. Die Kontaktierung der Elektroden 10, 12 muss beidseitig so gut sein, dass die Protonen $H^+$ und die Elektronen $e^-$ problemlos weg- beziehungsweise zugeleitet werden können. Durch die eine Gasdiffusionsschicht bildenden Poren der Elektroden 10, 12 werden die Reaktanten $CH_3OH$, $H_2O$ und $O_2$ oder Luft zugeführt und die Produkte $CO_2$ und $H_2O$ abgeleitet.

Die elektrochemische Oxidation von Methanol liefert bei vollständiger Umsetzung sechs Elektronen $e^-$ pro Formeleinheit, und zwar vereinfacht gemäss den folgenden Teilreaktionen:

$$\text{Anode: } CH_3OH + H_2O \rightarrow CO_2 + 6H^+ + 6e^-$$

$$\text{Kathode: } 3/2\, O_2 + 6H^+ + 6e^- \rightarrow 3\, H_2O$$

$$\text{Gesamt: } CH_3OH + 3/2\, O_2 \rightarrow CO_2 + 2\, H_2O$$

In Fig.2 sind getrennte Potentialkurven von Anode 20 und Kathode 22 einer DMFC dargestellt. Die Zellspannung $U_C$ einer realen Zelle ist die Differenz des Potentials von Anode und Kathode beim jeweiligen Strom I und entspricht nur im stromfreien Zustand der Differenz der Standardpotentiale $E_0$ der beiden Elektrodenreaktionen (1.18 V). Fliesst ein Strom I durch die Zelle, nähern sich die Potentialkurven von Anode 20 und Kathode 22 wegen der auftretenden Verluste an. Letztere sind einerseits die sogenannten kinetischen Verluste von Anode 21 und Kathode 23 auf Grund von Reaktionsüberspannungen an den Elektroden sowie die Ohm'schen Verluste im Elektrolyten, erkennbar an der linearen Abnahme der Zellspannung $U_C$ bei höheren Stromstärken I.

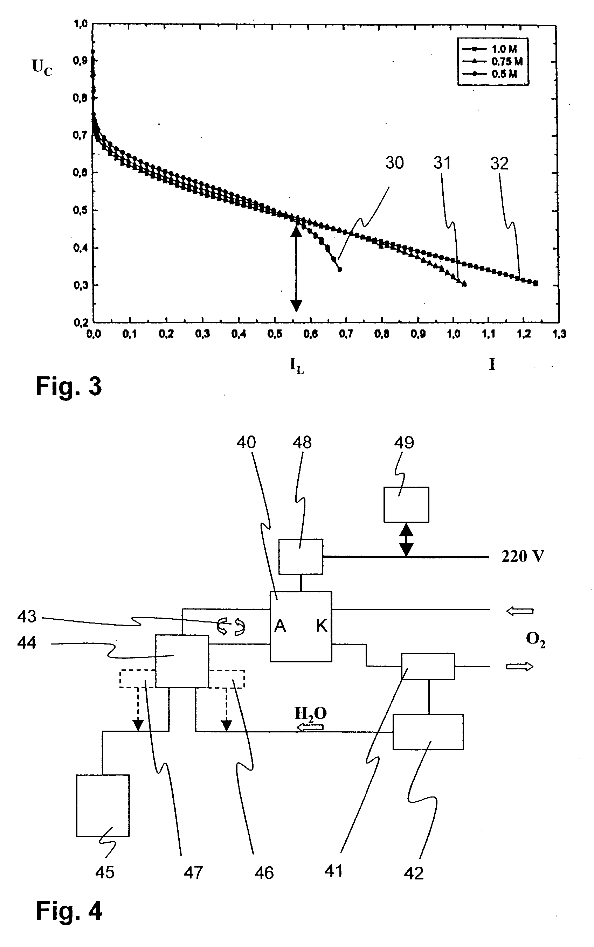

In Fig.3 ist ein typischer Verlauf einer Schar von drei Strom-Spannungs-Kennlinien 30, 31, 32 mit unterschiedlichen Methanolkonzentrationen M (M30: 0.5 molar, M31: 0.75 molar, M32: 1 molar) bei ansonsten gleichen Systemparametern und/oder Betriebsbedingungen dargestellt. Ab einer gewissen Stromstärke ist die Methanolkonzentration M in der Anodenarbeitsschicht nicht mehr ausreichend, so dass bei noch höheren Stromstärken die Zellspannung $U_C$ überproportional abnimmt. Für die geringste Methanolkonzentration (Kenninie 30) ist dementsprechend bei einer Grenzstromstärke $I_L$ ein deutlicher Knick in der Kennlinie ersichtlich.

Ein Problem der DMFC stellt die Verstopfung der kathodenseitigen Gasdiffusionsschicht beziehungsweise der Poren durch Wassertröpfchen dar. Das Wasser diffundiert als Hydrathülle mit dem Proton $H^+$ durch den Elektrolyten (Elektroosmose) oder wird durch die Kathodenreaktion erzeugt. Als Folge davon ist der Zugang von Sauerstoff zur aktiven Elektrodenfläche erschwert und die von der Zelle erzeugte elektrische Leistung nimmt ab. Ein weiteres prinzipielles Problem ist die Methanoldiffusion durch den Feststoffelektrolyten, welche umso bedeutender ist, je höher die Methanolkonzentration M ist. Bei Stromfluss wird nämlich Methanol zur Kathode transportiert, da ebenso wie Wasser auch Methanol das Proton $H^+$ solvatisiert. Dabei wird Methanol an der Kathode oxidiert, was zu einer spürbaren Absenkung des dortigen Elektrodenpotentials d.h. der Ausbildung eines Mischpotentials, führt. Die Versorgung der Anode mit Methanol ist somit derart einzustellen, dass zum einen die Konzentration an der Anodenarbeitsschicht möglichst optimal für den Katalysator ist, zum anderen aber die geschilderte Methanoldiffusion in einem akzeptablen Rahmen bleibt.

Zur Erzeugung höherer Spannungen werden bei praktischen Brennstoffzellensystemen mehrere Brennstoffzellen bipolar in Reihe geschaltet und nur stirnseitig kontaktiert. Die Stromkollektoren 14, 16 zwischen zwei benachbarten Brennstoffzellen sind in diesem Fall ersetzt durch bipolare Platten, welche beispielsweise aus Graphit bestehen und mittels entsprechender Kanäle gleichzeitig die Reaktantenzuführung übernehmen. Die Brennstofflösung wird dabei parallel zu den Zellen geführt, so dass die Methanolkonzentration überall ungefähr dieselbe ist.

Fig.4 zeigt ein Brennstoffzellensystem mit einem Brennstoffzellenstapel 40, wie es insbesondere für einen autarken Betrieb (stand alone) vorgesehen ist. Kathodenseitig wird mit einem nicht dargestellten Gebläse Sauerstoff $O_2$ vorzugsweise als Bestandteil von Luft zugeführt. Das in der Abluft vorhandene Wasser wird in einem Kondensator 41 wieder abgeschieden und in einen Wassertank 42 geführt. Die anodenseitige Brennstofflösung wird in einem Anodenkreislauf 43 zirkuliert, zu welchem ein Brennstofflösungsreservoir 44 als Puffer gehört. Sowohl das Wasser wie auch die Brennstofflösung werden durch nicht dargestellte Pumpen bewegt. Da die elektrochemische Reaktion in den Brennstoffzellen 40 Methanol konsumiert und wie dargelegt Letzterer durch den Elektrolyten diffundiert, muss das Brennstofflösungsreservoir 44 mit konzentriertem Methanol aus einem Methanoltank 45 und Wasser aus dem Wassertank 42 nachgefüllt werden. Nur der Methanoltank 45 muss bei diesem autarken System periodisch wieder von extern aufgefüllt werden.

An die Stirnseiten des Brennstoffzellenstapels 40 beziehungsweise dessen aussenliegenden Stromkollektoren wird ein Stromkreis mit einem nicht dargestellten Verbraucher elektrisch angeschlossen. Der Stromkreis umfasst vorzugsweise einen Wechselrichter oder Gleichrichter 48, welcher die Spannung des Systems auf ein gewünschtes Niveau von beispielsweise 220 V Wechselstrom umformt. Ein Zwischenspeicher 49 in Form einer Batterie sorgt bei Lastspitzen für ausreichend Leistung. Der Verbraucher ist in dieser Konfiguration auch bei einem kurzzeitigen Ausfall des Brennstoffzellensystems immer mit Strom versorgt.

Weder der Methanolverbrauch noch die Rate der oben erwähnten Diffusion von Wasser aus dem Anodenkreislauf zur Kathode sind vollständig bekannt und ändern zudem mit der Last beziehungsweise der bezogenen Leistung. Aus diesem Grund muss erstens der Füllstand der Brennstofflösung im Lösungsreservoir mit einem Niveausensor 46 überwacht und zweitens die korrekte Methanolkonzentration, typischerweise zwischen 0.5 und 5 Gewichtsprozent, gehalten werden. Ein Nachfüllen des Brennstoffreservoirs geschieht durch Wasserzugabe aus dem Wassertank 42.

Erfindungsgemäss wird nun zur Regelung der Methanolkonzentration M kein zusätzlicher Sensor 47 zur Messung des aktuellen Ist-Wertes benötigt, sondern die Brennstoffzelle selbst zu einer zumindest qualitativen Korrektur der Methanolkonzentration eingesetzt. Dabei wird im Betrieb des Systems die Reaktion der Zellspannung $U_C$ oder, im Falle eines Brennstoffzellenstapels, der Gesamt-Systemspannung U untersucht, welche sich als Folge einer Variation von einer der zwei Systemgrössen Stromstärke I beziehungsweise Stromdichte oder Methanolkonzentration M ergibt.

Beispielsweise wird im Betrieb des Systems periodisch im Abstand von typischerweise jeweils zehn Minuten, während ein paar Sekunden die Strom-Spannungs-Kennlinie abgetastet. Da sich der optimale Operationspunkt des Systems, definiert durch Strom und Spannung im Dauerbetrieb, in der Nähe des zur Soll-Methanolkonzentration gehörenden Knicks bei $I_L$ befindet, wird Letzterer dabei entdeckt. Falls die Grenzstromstärke $I_L$, d.h. der Übergang zur massentransportbegrenzten anodenseitigen Reaktionsrate, sich nun gegenüber der letzten Abtastung verschoben hat, kann daraus auf eine veränderte Methanolkonzentration M geschlossen werden. Ist insbesondere die Differenz zwischen der Grenzstromstärke $I_L$ und dem Operationspunkt kleiner oder gar negativ geworden, ist dies gleichbedeutend mit einer Abnahme der Methanolkonzentration M, so dass die Zuführung einer gewissen Methanolmenge $\Delta M$ nötig ist.

Andererseits kann die genannte Grenzstromstärke $I_L$ als Ort des Maximums der zweiten Ableitung der U(I) Kennlinie auch möglichst genau lokalisiert werden, beispielsweise mittels mathematisch beliebig komplexer Interpolationsprozeduren. Dazu kann es vorteilhaft sein, den linearen Teil der Strom-Spannungs-Kennlinie, welcher sich unter Anderem mit dem elektrischen Widerstand und damit dem Alter der Polymermembrane ändert, vorgängig zu subtrahieren. Weiter sollte eine mögliche Abhängigkeit der Kennlinie von deren Abtastgeschwindigkeit in Betracht gezogen werden. Aus der exakten Kenntnis der Grenzstromstärke lässt sich durch Vergleich mit tabellierten Werten die dazugehörige Konzentration M bestimmen.

Um die zeitlichen Abstände zwischen den besagten Abtastungen zu verlängern, kann auch mittels Modellrechnungen, basierend auf dem integriertem Zellstrom und dem Faradaygesetz sowie Schätzungen betreffend die Diffusion von Methanol durch die Membran, der Methanolbedarf abgeschätzt und periodisch Methanol nachgefüllt werden. Die vorgeschlagenen Abtastungen dienen in diesem Fall zur Kalibration des Verfahrens zwecks Eliminierung der unausweichlichen Unzulänglichkeiten des benutzten Modells beziehungsweise seiner Parameter.

Alternativ zur vorhergehend beschriebenen Methode kann auch spekulativ die Methanolkonzentration um einen bestimmten Wert erhöht werden, inbesondere falls am Operationspunkt bereits eine Abnahme der Spannung festgestellt wurde. Diese kann bekanntlich durch eine Änderung eines beliebigen Systemparameters verursacht worden sein. Sollte sich auf die Methanolzugabe ΔM hin die Spannung U wieder erholen, kann davon ausgegangen werden, dass tatsächlich eine Reduktion der Methanolkonzentration vorgelegen hatte. Andernfalls muss die Ursache anderweitig gesucht werden. Vorzugsweise werden jedoch die weiteren Systemparameter, wie die Temperatur T der Brennstofflösung, der Sauerstoffpartialdruck p oder die Sauerstoffflussrate F, vorgängig auf eine Änderung untersucht.

Um sicher zu gehen, dass ein beobachteter Spannungsabfall nicht kathodenseitig durch Massentransportbegrenzung der gasförmigen Reaktanden oder durch die beschriebene Verstopfung der Elektrodenporen durch Wassertröpfchen verursacht ist, kann bei einer Abtastung der kathodenseitige Gasdurchfluss vorübergehend erhöht werden. Allerdings verbraucht ein Gebläse dazu Energie, so dass sich die Energiebilanz des Systems dadurch verschlechtert.

Obschon die vorliegende Erfindung am Beispiel einer Direkt-Methanol-Brennstoffzelle beschrieben wurde, ist es klar, dass sie auch auf Brennstoffzellen anwendbar ist, die Wasserstoff oder andere Kohlenwasserstoffe wie Methan, Propan oder Ethanol direkt anodenseitig oxidieren. Dies gilt für den Fall, dass diese gasförmigen oder flüssigen Reaktanden nicht in reiner Form sondern als Gemisch, beispielsweise mit Stickstoff als Inertgas, vorliegen.

BEZUGSZEICHENLISTE

| 1 | Membranbrennstoffzelle |
|---|---|
| 10 | Anode |
| 11 | Feststoffelektrolyt |
| 12 | Kathode |
| 14, 16 | Stromkollektor |
| 20 | Potentialkurve der Anode |
| 21 | Spannungsabfall an der Anode |
| 22 | Potentialkurve der Kathode |
| 23 | Spannungsabfall an der Kathode |
| 30, 31, 32 | Strom-Spannungs-Kennlinien |
| 40 | Brennstoffzellenstapel |
| 41 | Kondensator |
| 42 | Wassertank |
| 43 | Anodenkreislauf |
| 44 | Brennstofflösungsreservoir |
| 45 | Methanoltank |
| 46 | Brennstoffniveausensor |
| 47 | Methanolkonzentrationssensor (Stand der Technik) |
| 48 | Wechselrichter |
| 49 | Zwischenspeichereinheit |
| $U_C$ | Zellspannung |
| $I_L$ | Grenzstromstärke |

## Patentansprüche

1. Verfahren zur Regelung der Methanolkonzentration (M) eines Direkt-Methanol-Brennstoffzellensystems mit mindestens einer Brennstoffzelle und einem separaten Methanolreservoir (45), wobei die Brennstoffzelle durch Kennlinien (30, 31, 32) einer Spannung (U) in Abhängigkeit der Systemgrössen Stromstärke (I) und Methanolkonzentration (M) sowie weiterer Systemparameter (T, p, F) charakterisiert ist, **dadurch gekennzeichnet, dass** eine Systemgrösse (I, M) variiert wird, und in Abhängigkeit der resultierenden Spannung (U) der Brennstofflösung Methanol aus dem Methanolreservoir (45) zugeführt wird.

2. Regelverfahren nach Anspruch 1, **dadurch gekennzeichnet, dass** vor besagter Variation der Systemgrösse (I, M) die weiteren Systemparameter (T, p, F) auf erfolgte Änderungen untersucht werden.

3. Regelverfahren nach Anspruch 1, **dadurch gekennzeichnet, dass** während besagter Variation ein kathodenseitiger Gasdurchfluss erhöht wird.

4. Regelverfahren nach einem der Ansprüche 1 - 3, **dadurch gekennzeichnet, dass** die Stromstärke (I) in einem bestimmten Bereich variiert und ein Strom-Spannungs-Kennlinienausschnitt ermittelt wird.

5. Regelverfahren nach Anspruch 4, **dadurch gekennzeichnet, dass** besagte Variation der Stromstärke (I) in bestimmten zeitlichen Abständen erfolgt.

6. Regelverfahren nach einem der Ansprüche 1 - 3, **dadurch gekennzeichnet, dass** bei festgehaltener Stromstärke (I) die Methanolkonzentration (M) um einen bekannten Wert ($\Delta$M) erhöht wird.

7. Regelverfahren nach Anspruch 6, **dadurch gekennzeichnet, dass** besagte Erhöhung der Methanolkonzentration nach einer beobachteten Spannungsabnahme erfolgt.

8. Regelverfahren nach einem der vorangehenden Ansprüche, wobei das Brennstoffzellensystem einen Stapel (40) von mindestens zwei, bipolar angeordneten und elektrisch in Serie geschalteten Brennstoffzellen umfasst,
   **dadurch gekennzeichnet, dass** die Spannung (U) die Gesamtspannung des Brennstoffzellenstapels (40) ist.

9. Regelverfahren nach Anspruch 1 oder 8, wobei das Brennstoffzellensystem im Normalbetrieb elektrische Energie in eine Zwischenspeichereinheit (49) speist, aus welcher wiederum ein Verbraucher versorgt wird,
   **dadurch gekennzeichnet, dass** bei besagter Variation der Systemgrössen (I, M) der Verbraucher durch die Zwischenspeichereinheit (49) unterbruchsfrei versorgt wird.

10. Verfahren zur Bestimmung einer Methanolkonzentration in einer Direkt-Methanol-Brennstoffzelle, welche durch Kennlinien (30, 31, 32) der Spannung (U) in Abhängigkeit der Systemgrössen Stromdichte (I) und Methanolkonzentration (M) sowie weiterer Systemparameter (T, p, F) charakterisiert ist,
    **dadurch gekennzeichnet, dass** durch eine Variation einer Systemgrösse (I; M) und gleichzeitiger Messung der Spannung (U) ein Kennlinienausschnitt ermittelt wird, aus welchem durch geeignete mathematische Analysen ein Wert ($I_L$) abgeleitet wird, aus welchem wiederum durch Vergleich mit tabellierten Werten die Methanolkonzentration (M) bestimmt wird.

$CH_3OH + CO_2 + H_2O$          $H_2O$

**Fig. 1**          $CH_3OH + H_2O$          $O_2$

**Fig. 2**

**Fig. 3**

**Fig. 4**

**Europäisches Patentamt**

# EUROPÄISCHER RECHERCHENBERICHT

Nummer der Anmeldung

EP 01 81 0741

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 1 258 153 A (SIEMENS AKTIENGESELLSCHAFT) 22. Dezember 1971 (1971-12-22) * Anspruch 5 * * Seite 2, Zeile 66 – Zeile 101 * * Seite 1, Zeile 43 – Seite 2, Zeile 57 * * Seite 1, Zeile 73 – Zeile 86 * | 1,8 | H01M8/04 |
| X | PATENT ABSTRACTS OF JAPAN vol. 010, no. 221 (E-424), 2. August 1986 (1986-08-02) -& JP 61 058170 A (SHIN KOBE ELECTRIC MACH CO LTD), 25. März 1986 (1986-03-25) * Zusammenfassung * | 1,2 | |
| X | PATENT ABSTRACTS OF JAPAN vol. 010, no. 201 (E-419), 15. Juli 1986 (1986-07-15) -& JP 61 042871 A (NISSAN MOTOR CO LTD), 1. März 1986 (1986-03-01) * Zusammenfassung * | 1,2 | RECHERCHIERTE SACHGEBIETE (Int.Cl.7) |
| X | US 4 629 664 A (DOI RYOTA ET AL) 16. Dezember 1986 (1986-12-16) * Spalte 8, Zeile 11 – Zeile 26 * * Spalte 8, Zeile 49 – Zeile 56 * * Spalte 3, Zeile 17 – Zeile 19 * * Spalte 5, Zeile 62 – Spalte 6, Zeile 2 * | 1 | H01M |

-/--

Der vorliegende Recherchenbericht wurde für alle Patentansprüche erstellt

| Recherchenort | Abschlußdatum der Recherche | Prüfer |
|---|---|---|
| DEN HAAG | 12. Februar 2002 | D'hondt, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 01 81 0741

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | K. J. CATHRO: "Fuel Control in Methanol-Air and Formaldehyde-Air fuel Cell Systems" JOURNAL OF THE ELECTROCHEMICAL SOCIETY., Bd. 118 , Nr. 9, September 1971 (1971-09), Seiten 1523-1529, XP002190039 ELECTROCHEMICAL SOCIETY. MANCHESTER, NEW HAMPSHIRE., US ISSN: 0013-4651 * Seite 1523, rechte Spalte, letzter Absatz - linke Spalte, Absatz 1 * | 1 | |
| X | WO 99 44253 A (BALLARD POWER SYSTEMS ;ZHANG JUIJUN (CA); COLBOW KEVIN MICHAEL (CA) 2. September 1999 (1999-09-02) * Seite 13, Zeile 3 - Zeile 6; Ansprüche 1,20,21,23 * | 1,8 | |
| A | PATENT ABSTRACTS OF JAPAN vol. 009, no. 169 (E-328), 13. Juli 1985 (1985-07-13) -& JP 60 041768 A (SHINKOUBE DENKI KK;OTHERS: 01), 5. März 1985 (1985-03-05) * Zusammenfassung * | 10 | RECHERCHIERTE SACHGEBIETE (Int.Cl.7) |
| A | FR 1 532 246 A (INST FRANCAIS DU PETROL) 12. Juli 1968 (1968-07-12) * Anspruch 1 * * Seite 1, linke Spalte, letzter Absatz - Seite 2, linke Spalte, Absatz 7; Abbildung 1 * | 1 | |
| A | PATENT ABSTRACTS OF JAPAN vol. 008, no. 268 (E-283), 7. Dezember 1984 (1984-12-07) -& JP 59 138074 A (HITACHI SEISAKUSHO KK), 8. August 1984 (1984-08-08) * Zusammenfassung * | 1 | |

-/--

Der vorliegende Recherchenbericht wurde für alle Patentansprüche erstellt

| Recherchenort | Abschlußdatum der Recherche | Prüfer |
|---|---|---|
| DEN HAAG | 12. Februar 2002 | D'hondt, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie,übereinstimmendes Dokument

EPO FORM 1503 03.82 (P04C03)

**Europäisches Patentamt**

**EUROPÄISCHER RECHERCHENBERICHT**

Nummer der Anmeldung

EP 01 81 0741

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN<br>vol. 005, no. 197 (E-086),<br>15. Dezember 1981 (1981-12-15)<br>-& JP 56 118273 A (NISSAN MOTOR CO LTD),<br>17. September 1981 (1981-09-17)<br>* Zusammenfassung * | 1 | |
| A | EP 0 073 044 A (HITACHI LTD)<br>2. März 1983 (1983-03-02)<br>* Seite 5, Zeile 18 - Zeile 19; Ansprüche 1,3 * | 3 | |
| A | GB 1 304 092 A (ROBERT BOSCH)<br>24. Januar 1973 (1973-01-24)<br>* Ansprüche 1,2 *<br>* Seite 3, Zeile 66 - Zeile 108 * | 1,3 | |
| A | DE 21 14 919 A (SIEMENS AG;VARTA AG)<br>5. Oktober 1972 (1972-10-05)<br>* Seite 2, letzter Absatz - Seite 3, Absatz 1; Anspruch 1 * | 10 | RECHERCHIERTE SACHGEBIETE (Int.Cl.7) |
| A | US 4 650 729 A (TAKAGI YASUO ET AL)<br>17. März 1987 (1987-03-17)<br>* Spalte 2, Zeile 31 - Zeile 55; Ansprüche 1,2 * | 9 | |

Der vorliegende Recherchenbericht wurde für alle Patentansprüche erstellt

| Recherchenort | Abschlußdatum der Recherche | Prüfer |
|---|---|---|
| DEN HAAG | 12. Februar 2002 | D'hondt, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 81 0741

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2002

| Im Recherchenbericht angeführtes Patentdokument | | Datum der Veröffentlichung | Mitglied(er) der Patentfamilie | | Datum der Veröffentlichung |
|---|---|---|---|---|---|
| GB 1258153 | A | 22-12-1971 | DE<br>FR<br>JP | 1771446 A1<br>2009327 A5<br>48027102 B | 10-02-1972<br>30-01-1970<br>18-08-1973 |
| JP 61058170 | A | 25-03-1986 | KEINE | | |
| JP 61042871 | A | 01-03-1986 | KEINE | | |
| US 4629664 | A | 16-12-1986 | JP<br>JP<br>JP<br>JP<br>CA<br>DE<br>EP | 1903785 C<br>6026132 B<br>61233973 A<br>61107666 A<br>1257647 A1<br>3582716 D1<br>0181569 A2 | 08-02-1995<br>06-04-1994<br>18-10-1986<br>26-05-1986<br>18-07-1989<br>06-06-1991<br>21-05-1986 |
| WO 9944253 | A | 02-09-1999 | DE<br>AU<br>AU<br>AU<br>WO<br>WO<br>EP<br>EP<br>AU<br>WO<br>EP | 19807876 A1<br>739786 B2<br>2604799 A<br>3141399 A<br>9944253 A1<br>9944250 A1<br>1060535 A1<br>1060532 A1<br>1023400 A<br>0030200 A1<br>1147567 A1 | 26-08-1999<br>18-10-2001<br>15-09-1999<br>15-09-1999<br>02-09-1999<br>02-09-1999<br>20-12-2000<br>20-12-2000<br>05-06-2000<br>25-05-2000<br>24-10-2001 |
| JP 60041768 | A | 05-03-1985 | KEINE | | |
| FR 1532246 | A | 12-07-1968 | KEINE | | |
| JP 59138074 | A | 08-08-1984 | KEINE | | |
| JP 56118273 | A | 17-09-1981 | KEINE | | |
| EP 0073044 | A | 02-03-1983 | JP<br>DE<br>EP<br>US | 58034574 A<br>3274930 D1<br>0073044 A2<br>4612261 A | 01-03-1983<br>05-02-1987<br>02-03-1983<br>16-09-1986 |
| GB 1304092 | A | 24-01-1973 | DE<br>CH<br>FR<br>SE | 1907737 A1<br>508285 A<br>2032734 A5<br>357102 B | 20-08-1970<br>31-05-1971<br>27-11-1970<br>12-06-1973 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 01 81 0741

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE 2114919 | A | | 05-10-1972 | DE | 2114919 | A1 | 05-10-1972 |
| US 4650729 | A | | 17-03-1987 | JP | 61047077 | A | 07-03-1986 |
| | | | | JP | 61047078 | A | 07-03-1986 |
| | | | | DE | 3528673 | A1 | 13-02-1986 |

Für nähere Einzelheiten zu diesem Anhang : siehe Amtsblatt des Europäischen Patentamts, Nr.12/82

13